# DEMANDE DE BREVET EUROPEEN

(11) **EP 2 733 463 A1**
(43) Date de publication de la demande: **21.05.2014**
(21) Numéro de dépôt: 13350003.3
(22) Date de dépôt: 14.11.2013
(51) Int. Cl.: G01C 21/34, B60W 30/14, B60K 28/06, B60W 50/08, B60W 50/00

(54) **Procédé de controle personnalisé du déplacement d'un véhicule automobile et dispositif de guidage**

(30) Priorité: 20.11.2012 FR 1203109
(71) Demandeur: Ekman, Adolphe, 59800 Lille (FR); Naver, Michel, 1190 Bruxelles (BE)
(72) Inventeur: Ekman, Adolphe, 59800 Lille (FR); Naver, Michel, 1190 Bruxelles (BE)
(74) Mandataire: Tournel, Jean Louis

(57) **Abrégé**

Procédé de contrôle personnalisé du déplacement d'un véhicule automobile comprenant un moyen de guidage par satellite lequel moyen de guidage comprend un écran 1A de visualisation d'un itinéraire calculé, ce procédé comprenant une étape relative au recueil d'informations pour la détermination d'un itinéraire ce procédé étant caractérisé en ce qu'on établi un itinéraire personnalisé adapté ainsi qu'au moins des consignes de vitesses maximales personnalisées à ne pas dépasser sur le dit l'itinéraire les dites consignes étant établies en fonction des critères physiologiques du conducteur et des critères mécaniques du véhicule et durant le parcours on surveille le respect des consignes.

## Description

Pour faciliter le déplacement de cars, camions ou voitures individuelles, il est largement connu d'utiliser un appareil de programmation d'itinéraires dit « GPS » qui, à partir de relevés cartographiques et de la position du véhicule fournie par un balise et une pluralité de satellites géostationnaires va déterminer un itinéraire en fonction de critères et va ensuite dérouler l'itinéraire en donnant des indications de changement de direction aux intersections.

Ces dispositifs sont plus ou moins performants. Ils indiquent, par exemple, le temps de parcours total ou encore font apparaitre la vitesse maximale autorisée du tronçon sur lequel le véhicule circule et, en fonction de cette information, signalent au conducteur que le véhicule circule au dessus de la vitesse autorisée.

Ces dispositifs sont également parfois couplés à de l'information du type travaux ou accidents et affichent l'information sur un écran.

Ces dispositifs sont intégrés aux véhicules en sorte que l'on peut difficilement le remplacer par un autre ou sont nomades et il est possible d'échanger un appareil par un autre ou de déplacer le dispositif d'un véhicule vers un autre. Dans ce dernier cas, la seule liaison avec le véhicule est l'alimentation électrique de l'appareil.

Ces appareils sont des aides à la conduite mais ne tiennent pas compte du type de véhicule et n'agissent pas sur le véhicule. Ils calculent le même itinéraire pour tous selon des critères proposés par le créateur du logiciel tel le parcours le plus rapide, le plus court ou en excluant les routes à péages. Ils tiennent parfois compte d'incidents de circulation pour recalculer un itinéraire.

La conduite d'un véhicule est dangereuse car elle demande beaucoup d'attention c'est pourquoi il faut que le conducteur possède toute ses capacités ou adapte sa conduite.

Pour éviter qu'un véhicule démarre avec un conducteur sous l'emprise de l'alcool, il existe des systèmes de mesure du taux d'alcool du conducteur et en cas de détection d'un taux limite le système va empêcher le démarrage du véhicule.

Ce dispositif peut être monté lors de la fabrication du véhicule ou installé après achat.

Un autre aspect intervenant dans la conduite est la prise de médicaments qui peuvent diminuer les reflexe, mais aucune mesure n'est prise.

L'âge agit également sur les capacités de conduite des conducteurs.

Il y a donc de nombreux paramètres relatifs au conducteur et au véhicule qui devraient être pris en compte pour non seulement définir un itinéraire mais rendre plus sécurisant les déplacements.

En effet, l'usure du véhicule et/ou sa charge devraient être prises en compte pour calculer un itinéraire.

Les itinéraires des appareils de guidage sont, à ce jour, calculés en fonction du critère de rapidité ou de distance ainsi que l'utilisation ou non des routes à péage. L'itinéraire calculé avec le critère de rapidité est le même pour tous, quelque soit l'âge ou l'état de la voiture.

Il consiste essentiellement en une succession de points géographiques déterminés par un logiciel de calcul. Il appartient au conducteur de tenir compte de son état physiologique et/ou de celui du véhicule pour circuler sur le parcours calculé et adapter à sa guise sa vitesse.

Un autre point est qu'il n'est pas obligatoire d'utiliser ce moyen de guidage ni de respecter les indications. Le dispositif peut indiquer une vitesse maximale de 110 km/h sans contrainte sur le fonctionnement du véhicule.

On connait EP-A-2.02847 divulgue de considérer des critères physiologiques pour déterminer si le conducteur respecte une vitesse autorisée mais sans en tenir compte pour calculer un itinéraire.

L'invention se rapporte donc à un procédé de contrôle personnalisé du déplacement d'un véhicule automobile comprenant un moyen de guidage par satellite lequel moyen de guidage comprend un écran de visualisation d'un itinéraire calculé, ce procédé comprenant une étape relative au recueil d'information pour la détermination d'un itinéraire ce procédé étant caractérisé en ce qu'on établit un itinéraire personnalisé adapté aux capacités du conducteur et du véhicule ainsi qu'au moins des consignes de vitesses maximales personnalisées à ne pas dépasser sur le dit itinéraire les dites consignes étant établies en fonction des critères physiologiques du conducteur et des critères mécaniques du véhicule et durant le parcours on surveille le respect des consignes.

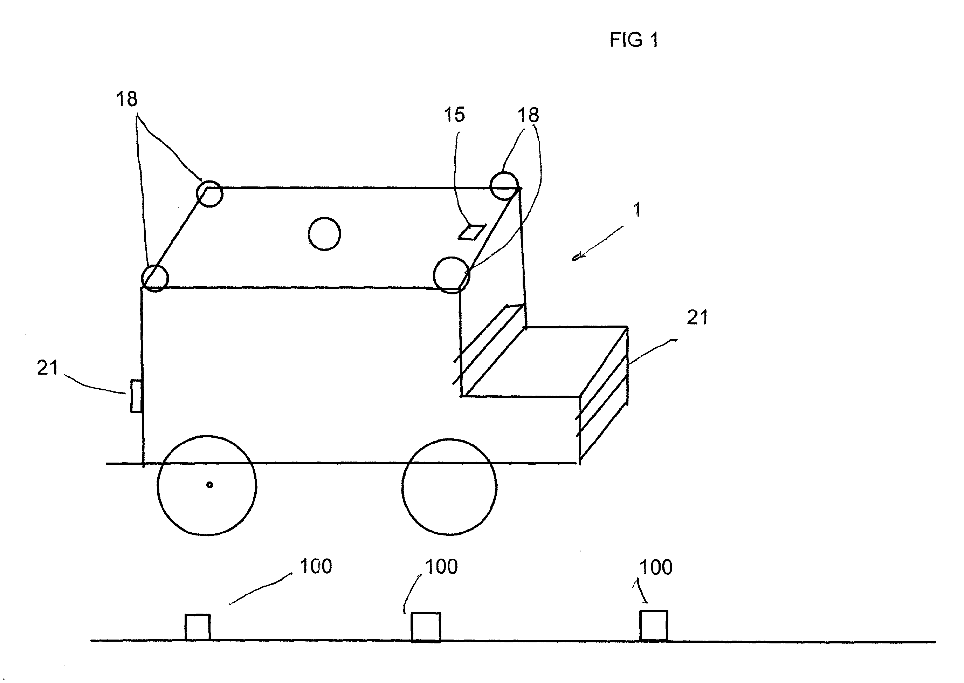

L'invention sera bien comprise à l'aide de la description ci après faite à titre d'exemple non limitatif en regard du dessin qui représente
FIG 1: Un véhicule équipé du dispositif de guidage

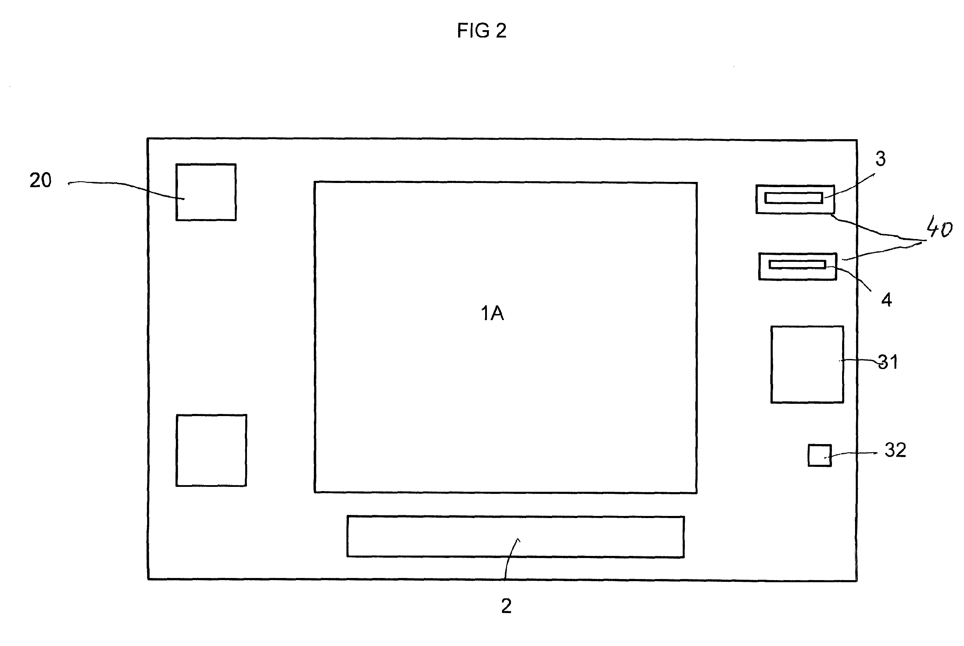

FIG 2: une partie du dispositif de guidage

En se reportant au dessin on voit que pour aider le conducteur d'un véhicule il utilise un appareil 1 de guidage par satellite dit « GPS » qui visualise la position du véhicule par rapport à une cartographie et qui fournit au conducteur des indications sur les changements de directions lors du déroulement des parcours.

Pour cela le véhicule automobile communique avec des satellites géostationnaires qui émettent des signaux permettant à l'appareil de guidage de se localiser sur une carte.

Lors d'un déplacement le chauffeur doit indiquer la destination, la position où il se trouve étant celle du « GPS » et le calcul se fait.

Un calcul est réalisé pour établir un itinéraire qui prend en compte des critères qui seront définis plus loin.

Dans l'art antérieur cet itinéraire était établi en fonction de deux critères à savoir la longueur du trajet et le temps estimé le plus court du trajet en sélectionnant certaines voies de circulation. Le conducteur choisit s'il souhaite la route la plus courte en temps ou en distance et le logiciel détermine le parcours à suivre.

Pour cela on introduit l'information destination et le choix du type de trajet (+ court ou + rapide) dans une unité de calcul.

Selon l'invention, préalablement au calcul de l'itinéraire, on introduit des informations relatives au conducteur et/ou des informations relatives à l'état du véhicule et lors de l'étape de calcul on prend en compte les informations relatives au conducteur et/ou au véhicule pour en supplément du calcul d'un itinéraire adapté personnalisé appliquer au moins des vitesses maximales personnalisées à ne pas dépasser sur le dit l'itinéraire.

Chaque itinéraire calculé le sera en fonction des capacités du véhicule et/ou du conducteur. Non seulement l'itinéraire pourra être géographiquement différent évitant par exemple des sections de routes à forte pente mais également la vitesse sera différente, par exemple, selon l'âge ou selon l'ancienneté dans le permis ou encore le nombre d'infractions ou d'accidents.

Par exemple pour le jeune conducteur, l'écran de visualisation indiquera 110Km/h sur les portions où un conducteur expérimenté aura pour consigne 130 Km/h.

Un conducteur condamné pour excès de vitesse pourra, par exemple être limité comme les jeunes chauffeurs pendant une période d'un an.

Ainsi, on va tenir compte de paramètres importants pour calculer un itinéraire personnalisé et donc tenir compte de l'état du véhicule, de sa charge et des capacités du conducteur. On va donc déterminer des vitesses maximales que doit respecter le chauffeur ainsi que des itinéraires qui sont adaptés au véhicule et/ou au conducteur. Par exemple, si le camion est à vide, il peut emprunter certaines routes de montagne qu'il ne pourrait pas faire s'il était chargé.

En effet, le calcul peut ainsi déterminer que le conducteur ne doit pas dépasser, par exemple, une vitesse de 70 km/h sur certains tronçons de route alors qu'officiellement la vitesse autorisée est de 90 km/h. On peut également tenir compte des conditions atmosphériques (neige ou brouillard par endroit) pour modifier l'itinéraire.

Lors du déroulement du trajet, en complément des informations d'orientations adressées au conducteur, on informe le conducteur de la vitesse maximale calculée qu'il doit respecter.

En cas de dépassement de la vitesse calculée, une alerte est émise et si le véhicule ne revient pas à la vitesse calculée préconisée ou en dessous, le calculateur agit progressivement pour inciter le chauffeur à revenir à vitesse normale et si le chauffeur ne modifie pas son comportement, le calculateur pourra agir appliquer les consignes ou pour stopper le fonctionnement du véhicule.

Il peut également déterminer les pauses et la durée de la pause. Par exemple, il est recommandé de faire une pause tous les 2 heures. En fonction de l'âge croissant ou de différents paramètres physiologiques, la fréquence des pauses sera augmentée. Si le véhicule circule sur des routes sinueuses, la fréquence des pauses est augmentée.

Un tableau ou une équation établiront le rapport entre la réduction des vitesses à appliquer et les paramètres physiologiques du conducteur.

Le calculateur peut donc imposer de respecter des règles en agissant sur l'électronique qui gère les moteurs. Ainsi si le conducteur roule trop vite après plusieurs avertissements visuels, et/ou sonores, le calculateur réduit automatiquement la vitesse en agissant sur le pilotage des injecteurs.

Le conducteur sera équipé d'un moyen de mémorisation tel une carte mémoire 3 personnalisée infalsifiable dans laquelle ont été mémorisées les informations relatives à l'état de santé du conducteur comme sa vision, la prise de médicament, ainsi qu'éventuellement des informations sur la validité de son permis de conduite. On pourrait comparer cette carte à la « CARTE VITALE »(marque déposée du citoyen français).

Le véhicule sera équipé également d'un moyen de mémorisation tel une carte 4 à mémoire contenant des informations sur son état technique, le type de pneumatique, le dernier changement de pneus ou de plaquettes de frein, etc .Cette carte peut s'enrichir des événements intervenus qui sont susceptibles d'informations sur le comportement du véhicule.

Dans la phase de recueil d'informations, les cartes à mémoire seront introduites dans au moins un lecteur 40 de cartes. Pour l'utilisation, après lecture des données par un dispositif, on calculera l'itinéraire personnalisé.Aucun itinéraire ne pourra être calculé en l'absence de ces cartes véhicule/conducteur. Bien évidemment par carte on comprend tout autre support.

Une vérification du taux d'alcool dans le sang est également effectuée et l'information est introduite dans le dispositif pour être prise en compte et par exemple, le véhicule sera immobilisé si le seuil fixé sur la machine est dépassé toutefois pour certain véhicule, une tolérance sera admise et on pourra circuler mais avec une réduction de vitesse si le taux d'alcool est sous la valeur maximale autorisée mais pas nul.

Par ailleurs, on procède à un examen de lucidité en posant des questions au conducteur qui a un temps réduit pour répondre. Les questions sont adaptées à la capacité intellectuelle du conducteur qui indique son niveau d'étude pour que les questions soient adaptées. Un clavier 31 et/ou un microphone 32 permettent de répondre.

Les questions sont générées par un serveur qui communique avec le dispositif par voie hertzienne et qui pourra déterminer les questions en fonction d'informations mémorisées dans la carte mémoire.

Egalement, on active le fonctionnement d'un système de surveillance du véhicule par communication dudit véhicule avec des balises 100 émettrices et réceptrices localisées le long des voies de circulation, par exemple tous les kilomètres. Ces balises placées en haut d'un mat sont disposées de chaque coté de la voie de circulation. Elles sont alimentées, de préférence par des panneaux solaires.

Ces balises analysent la vitesse du véhicule qui passera devant. Le véhicule comporte au moins un émetteur 21 avant et au moins un émetteur arrière qui vont renseigner la balise et/ou le serveur qui pilote cette balise de la distance physique entre les deux émetteurs. En fonction de la donnée distance physique réelle entre les deux émetteurs et du temps entre la réception du signal émis par le premier émetteur et le second émetteur, il est possible de calculer la vitesse réelle.

Plus particulièrement mais non limitativement, le véhicule type transport de passagers est également équipé de quatre signaux 18 visuels placés chacun à un coin du véhicule. Ces signaux seront allumés lorsque le conducteur ne respecte pas les consignes données par le dispositif.

Pour la mise en oeuvre du procédé, outre le système de localisation on utilisera :
Un moyen 3 tel un support physique pour mémoriser et réceptionner des informations personnelles sur le conducteur,
Un moyen 4 pour mémoriser et réceptionner des informations sur le véhicule,
Un moyen 2 de calcul d'un itinéraire en fonction de critères personnalisés liés aux capacités du conducteur et du véhicule, cet itinéraire étant personnalisé par exemple en préconisant des vitesses adaptées au conducteur et/ou aux conditions de circulation.

Par exemple, le conducteur introduit approximativement la valeur de la charge qui pourra être prise en compte lors du calcul. En effet si la charge est lourde, il peut être préférable de ne pas circuler le véhicule sur certaine routes à forte pente qui augmente la consommation et l'usure des freins.

Des moyens 20 pour agir sur le fonctionnement ( freinage, accélération...) du véhicule sont également prévus. Lorsque le véhicule est livré avec le « GPS » les liaisons de communication avec le boitier gestion moteur sont mises en place lors de l'assemblage du véhicule. Dans le cas d'un montage postérieur le dispositif sera équipé d'un ou plusieurs connecteurs qui pourraient se brancher sur la prise diagnostic qui équipe de nombreux véhicule ou être montés en parallèles sur les connecteurs existants du boitier de gestion du moteur.

Le dispositif peut se présenter sous la forme d'un cadre présentant un emplacement pour y loger un écran 1A de visualisation des itinéraires tel un « GPS » et intégrant au moins un moyen en vue d'introduire des informations relatives au conducteur et/ou au véhicule tel au moins un lecteur 40 de carte.

Mais plus généralement, le cadre intègre un GPS.

Le dispositif est placé pour être dans le champ de vision du chauffeur et par exemple un système de projection sur le pare-brise montre les consignes de l'itinéraire. Les consignes peuvent être projetées sur une image filmée de la route.

A partir des informations vitesse et masse en déplacement et des paramètres de freinage du véhicule (plaquette, liquide de frein etc), une distance de freinage sera calculée et la limite de sécurité sera visualisée sur une image filmée par une caméra 15 placée à l'avant du véhicule. Le conducteur visualisera donc la ligne de sécurité et si celle-ci se projette sur le véhicule qui le précède cela signifie que la distance entre les deux véhicules est insuffisante. Une alerte sera alors émise.

L'avantage c'est que le conducteur voit immédiatement sur une image réelle, là où son véhicule devrait stopper et donc s'aperçoit rapidement qu'il est en danger si la limite de sécurité se projette sur le véhicule qui le précède.

Comme cela a été dit, l'avant et l'arrière du véhicule comporte au moins un moyen émetteur/récepteur 21 afin de communiquer avec des balises 100 placées au long de la route qui pourront détecter un excès de vitesse et avertir les forces de l'ordre si après émission d'une alerte, le véhicule poursuit sa route à la même vitesse.

Le moyen émetteur/récepteur pourra être du type connu sous l'appellation anglaise « smartphone ». Pour introduire les informations relatives au véhicule, on mémorise les dites informations sur un support physique 3, lesquelles informations ne peuvent être modifiées qu'avec une autorisation. Il en est de même avec celles relatives au conducteur.

Il est prévu un dispositif d'arrêt d'urgence comprenant, sous le châssis, un dispositif de projection d'harpons dirigés vers le sol pour s'y agripper comme des grappins dans le but de stopper le véhicule .Ces harpons sont projetée par une charge exothermique suite à la manoeuvre de deux boutons de commande installés sur le volant.

Ces différentes mesures devraient conduire à la réduction des accidents de la route.

Le moyen émetteur/récepteur avant fonctionne avec une fréquence différente du moyen émetteur/récepteur placé à l'arrière.

Avec ce procédé, il est impératif de ne permettre au véhicule de se déplacer que sous contrôle du « GPS ».Tous les déplacements du véhicule doivent être calculés par le dispositif car non seulement il détermine l'itinéraire mais également les vitesses imposées. L'installation comprend donc un moyen pour autoriser le déplacement du véhicule que si une programmation de l'itinéraire est activée.

Le « smartphone » est un moyen simple de communiquer et il est alors possible d'utiliser ces appareils pour les différentes communications.

Un logement sera prévu à l'avant et l'arrière du véhicule pour y introduire les « smartphones ». Il en est de même des panneaux de signalisation. Cela permet de communiquer l'information panneau de signalisation au conducteur qui sera muni d'un écran.

Il comprend un tableau de réduction de la vitesse en rapport avec l'âge du conducteur et/ou ses aptitudes physiques et/ou son ancienneté dans la conduite.

Le véhicule disposera d'une mémoire qui enregistre les conditions réelles des déplacements ainsi que les informations sur le conducteur et les agents de la force publique disposent d'un moyen d'interrogation de cette mémoire, le dit moyen d'interrogation étant sans contact

Le véhicule est quasi piloté en automatique.

Un autre élément pris en compte sera l'encombrement routier. En effet avec les différents moyens permettant de communiquer entre les panneaux signalétiques et les véhicules, il est possible de connaitre la densité du flux de véhicules sur le parcours déterminé.

Le système peut dès lors tenir compte de cet encombrement pour calculer et proposer au moins un itinéraire de substitution qui sera moins encombré.

Le système comprend donc un moyen de détermination du nombre de véhicules empruntant l'itinéraire calculé et un moyen en vue de proposer un itinéraire de substitution moins encombré. Il peut être prédictif dans la mesure où en principe tous les itinéraires sont calculés avant de les emprunter donc on connait.

## Revendications

1. Procédé de contrôle personnalisé du déplacement d'un véhicule automobile comprenant un moyen de guidage par satellite lequel moyen de guidage comprend un écran 1A de visualisation d'un itinéraire calculé, ce procédé comprenant une étape relative au recueil d'informations pour la détermination d'un itinéraire ce procédé étant **caractérisé en ce qu'**on établi un itinéraire personnalisé adapté ainsi qu'au moins des consignes de vitesses maximales personnalisées à ne pas dépasser sur le dit l'itinéraire les dites consignes étant établies en fonction des critères physiologiques du conducteur et des critères mécaniques du véhicule et durant le parcours on surveille le respect des consignes.

2. Procédé de contrôle personnalisé du déplacement d'un véhicule selon la revendication 1 **caractérisé en ce que** pour introduire les informations relatives au conducteur, on mémorise les dites informations sur un support physique 4 lesquelles informations ne peuvent être modifiées qu'avec une autorisation.

3. Procédé de contrôle personnalisé du déplacement d'un véhicule selon la revendication 1 **caractérisée en ce qu'**on teste le taux d'alcoolémie et si le taux est supérieur à une valeur, on immobilise le véhicule.

4. Procédé de contrôle personnalisé du déplacement d'un véhicule selon la revendication 1 **caractérisée en ce qu'**on teste la lucidité du conducteur en posant des questions au conducteur qui a un temps réduit pour répondre.

5. Procédé de contrôle personnalisé du déplacement d'un véhicule selon la revendication 1 **caractérisé en ce qu'**a partir des informations vitesse et masse en déplacement et des paramètres de freinage du véhicule (plaquette, liquide de frein etc), une distance de freinage est calculée et la limite de sécurité est visualisée sur une image filmée par une caméra 15 placée à l'avant du véhicule.

6. Procédé de contrôle personnalisé du déplacement d'un véhicule selon la revendication 1 caractérisé qu'en cas de dépassement de la vitesse calculée, une alerte est émise et si le véhicule ne revient pas à la vitesse calculée préconisée ou en dessous, le calculateur agit progressivement pour inciter le chauffeur à revenir à vitesse normale et si le chauffeur ne modifie pas son comportement, le calculateur agit directement sur le fonctionnement du véhicule.

7. Procédé de contrôle personnalisé du déplacement d'un véhicule selon la revendication 1 **caractérisé en ce qu'**on équipe le véhicule d'au moins un émetteur/ récepteur à l'avant et l'arrière du véhicule et ces émetteurs/récepteurs communiques avec des balises 100 émettrices et réceptrices localisées le long des voies de circulation, les dites balises étant alimentées par des panneaux photovoltaïques.

8. Procédé de contrôle personnalisé du déplacement d'un véhicule selon la revendication 7 **caractérisé en ce que** l'émetteur/récepteur placé à l'avant du véhicule fonctionne à une fréquence différente de l'émetteur/récepteur placé à l'arrière du véhicule.

9. Moyens pour la mise en oeuvre du procédé selon l'une quelconque des revendications 1 à 8 **caractérisé en ce qu'**il comprend un moyen 2 de calcul d'un itinéraire personnalisé en fonction de paramètres du conducteur et/ou du véhicule
un moyen 3 tel un support physique pour mémoriser et réceptionner des informations personnelles sur le conducteur et,
un moyen 4 pour mémoriser et réceptionner des informations sur le véhicule.

10. moyens selon la revendication 9 **caractérisé en ce qu'**il comprend un moyen 20 pour agir sur le fonctionnement du véhicule en cas de non respect des consignes.

11. Moyens selon la revendication 10 **caractérisé en ce qu'**il comprend un cadre logeant un écran 1A de visualisation des itinéraires calculés et au moins un moyen en vue d'introduire des informations relatives au conducteur et/ou au véhicule.

12. Moyens selon la revendication 7 et 9 **caractérisé en ce que** le véhicule comprend au moins un émetteur 21 à l'avant et au moins un émetteur 21 à l'arrière qui communiquent avec des balises disposées le long des routes.

13. Moyens selon la revendication 9 **caractérisé en ce qu'**il comprend aux quatre coins du véhicule un signal 18 visuel.

14. Moyens selon la revendication 9 **caractérisé en ce qu'**il comprend une camera à l'avant du véhicule et un moyen de visualisation de la limite de sécurité sur l'image filmée par la caméra avant.

15. Moyens selon la revendication 12 **caractérisé en ce que** les balises sont situées de chaque coté de la voie de circulation.

16. Moyens selon la revendication 12 ou 15 **caractérisée en ce que** les balises sont alimentées par des panneaux photovoltaïques.

17. Moyens selon la revendication 9 **caractérisé en ce qu'**il comprend un dispositif d'arrêt d'urgence comprenant, sous le châssis, des harpons dirigés vers le sol ayant fonction de grappins destinés à être propulsés vers le sol pour s'y ancrer et stopper le véhicule.

18. Moyens selon la revendication 9 **caractérisé en ce qu'**il comprend un moyen pour autoriser le déplacement du véhicule que si une programmation de l'itinéraire est activée.

19. Moyens selon la revendication 9 **caractérisé en ce qu'**il comprend un tableau de réduction de la vitesse en rapport avec l'âge du conducteur.

20. Moyens selon la revendication 9 **caractérisé en ce que** le véhicule dispose d'une mémoire qui enregistre les conditions réelles des déplacements ainsi que les informations sur le conducteur et les agents de la force public disposent d'un moyen d'interrogation de cette mémoire, le dit moyen d'interrogation étant sans contact.

21. Moyens selon la revendication 9 **caractérisé en ce qu'**il comprend un moyen de détermination du nombre de véhicules empruntant l'itinéraire calculé.

22. Moyens selon la revendication 21 **caractérisé en ce qu'**il comprend un moyen en vue de proposer un itinéraire de substitution moins encombré
